# EUROPEAN PATENT APPLICATION

(11) **EP 1 552 757 A1**
(43) Date of publication of application: **13.07.2005**
(21) Application number: 04258185.0
(22) Date of filing: 30.12.2004
(51) Int. Cl.: A23L 2/39, A23L 2/02, A23L 2/10

(54) **Methods of producing beverage powders**

(30) Priority: 12.01.2004 US 755736
(71) Applicant: Kraft Foods Holdings, Inc., Northfield, Illinois 60093 (US)
(72) Inventor: West, Leslie G., Illinois 60022 (US); Tsui, Ida C., Illinois 60048 (US)
(74) Representative: Smaggasgale, Gillian Helen

(57) **Abstract**

Methods for converting fruits and vegetables into powders that help to better preserve perceived colors of the fruits and vegetables and/or improves dispersion of the powder when the powder is mixed with a liquid medium to form a beverage.

## Description

### Field

The invention pertains to methods of making powders that can be mixed with a liquid into a beverage, and in particular powders that can be mixed with a liquid into a beverage having selected color properties and/or powder dispersion qualities.

### Background

Powders that can be mixed with a liquid to form a beverage may be made from fruits and vegetables. One method of making such a beverage powder comprises drying the fruits and vegetables, then pulverizing the dried and fruits and vegetables into powders.

U.S. Patent Number 1,619,202 discloses a process for reducing fruits and vegetables into powdered, soluble forms for mixing with a liquid to form a beverage. The process comprises grinding or pulping the fruits and vegetables. A liquid may be added during or after the grinding. The ground fruit and vegetables may be passed through a heated chamber under a vacuum to drive off the water and reduce the fruit and vegetables to a powder form.

U.S. Patent Number 4,267,196 discloses another method for preparing a powder that can be mixed with a liquid to form a beverage. A fruit precursor comprising substantially nonedible and nonpalatable portions of the fruit are comminuted or reduced and then digested with an edible, water soluble agent to adjust the pH of the precursor to a value at which the precursor cells comprising higher carbohydrates rupture and amylytic enzymes and the precursor are active. After digestion, a fruit puree may be withdrawn, dried, and pulverized into a powder.

U.S. Patent Number 4,417,405 discloses a method for producing a reconstitutible flaked product from fruits. The method comprises forming a puree by dicing the fruit, softening the diced fruit in boiling water, and pumping the softened fruit through screens to remove undesirable material. The fruit puree is then pumped onto a heated drum dryer and fed through a nip between the drum dryer and spread rollers to form a sheet of dried puree. A blade removes the sheet from the dryer drum, allowing the sheet to be broken up and reduced into flakes of the desired size by a screw conveyor, a flaker, and finally a separator.

With some prior methods of providing a powder or flake dried fruit and vegetable mixture combinable with a liquid to form a beverage, the colors of the beverage may be undesirable, and undesirable lumping and floating of particles may occur.

### Summary

A method is provided for producing a beverage powder that is mixable with a liquid medium in order to form a beverage. The method includes the step of providing or selecting at least one beverage ingredient that includes at least one of a fruit and a vegetable. Various combinations of fruits and/or vegetables may also comprise the beverage ingredient. The method further includes the step of pureeing the at least one beverage ingredient into an ingredient puree. Next, the method includes the step of freeze drying the ingredient puree into a dried ingredient puree. At least a portion of the step of freeze drying the ingredient puree into a dried ingredient puree may occur at temperatures between -20°C and -40°C. The method includes the step of pulverizing the dried ingredient puree to form a powder.

The method may include the step of adding a liquid to the at least one beverage ingredient prior to the step of pureeing the at least one beverage ingredient into an ingredient puree. The step of pureeing the at least one beverage ingredient into an ingredient puree may also include the step of releasing easily dissolvable materials from a matrix for the at least one beverage ingredient. The step of releasing of materials from the matrix may include the step of separating problematic particles and allowing them to disperse before they interact among themselves. Problematic particles may include those that tend to lump or clump together, and those that tend to float when the powder is mixed with a liquid.

The method may include the step of packaging the powder in one of a bottle, packet, or canister. The method may also include the step of mixing the beverage powder with a liquid medium to form a beverage. The liquid medium may comprise water, or the liquid medium may comprise a juice made at least in part from a fruit or vegetable.

The method may include the step of vacuum drying the ingredient puree. The vacuum drying of the ingredient puree may occur during or following the freeze drying step. At least a portion of the step of vacuum drying the dried ingredient puree may occur at a vacuum of between 50 and 300 millitorr. The step of vacuum drying the dried ingredient puree may include the step of heating the dried ingredient puree during the vacuum drying thereof. At least a portion of the step of heating the dried ingredient puree may occur at a temperature above 30°C.

A method of making a beverage powder formable into a beverage having a target color is provided. The method comprises selecting one or more fruits or vegetables. A reference color is assigned to the one or more fruit or vegetables. A target color is selected for the beverage powder. The target color for the beverage powder corresponds to the reference color assigned to the one or more fruit or vegetables. The method includes pureeing the one or more fruit or vegetables into an ingredient puree. Next, the ingredient puree is dehydrated into a dried ingredient puree. The dried ingredient puree is then ground to reduce the dried ingredient puree into a beverage powder. The method also includes comparing the actual color of the beverage powder to the target color. The beverage powder may be discarded if the actual color and target color do not match, or the beverage powder may be accepted if the actual color and target color match.

The method may include the step of dehydrating the ingredient puree into a dried ingredient puree by freeze drying the ingredient puree. The method may also include the step of dehydrating the ingredient puree into a dried ingredient puree by drying the ingredient puree under a vacuum. The method may also include a step of drying the ingredient puree under a vacuum while applying heat to the ingredient puree.

The method step of assigning a reference color to the one or more fruit or vegetables may include the step of selecting the reference color to correspond to a fresh color associated with a fresh form of the one or more fruit or vegetables. The method step of selecting a target color for the beverage powder may include the step of adjusting the reference color based upon a color of a liquid medium with which the beverage powder is to be mixed. The reference color may be adjusted based upon the resulting color when the beverage powder is mixed with a liquid medium that includes a fruit or vegetable juice having a color.

The one or more fruit or vegetables for forming into a powder in accordance with the methods may include one or more of broccoli, cantaloupe, carrots, spinach, sweet potato, apple, blueberry, kale and strawberry.

Powders are also provided that are made in accordance with any of the methods discussed herein.

### Brief Description of the Drawings

Figure 1 is a diagram illustrating various steps that can be performed to produce a beverage powder; and
Fig. 2 is a table showing test results from comparing colors of prior art beverage powders and beverage powders made in accordance with methods described herein.

### Detailed Description of Preferred Embodiments

The invention is preferably embodied in methods for converting fruits and vegetables into powders that help to better preserve perceived colors of the fruits and vegetables and/or improves dispersion of the powder when the powder is mixed with a liquid medium to form a beverage, and powders made according to such methods.

The methods involve pureeing of the fruit and vegetables 20 before drying 30 and pulverizing into powders 40, which greatly facilitates the dissolutions of powders when hydrated while maintaining the color and freshness associated with the original fruit and/or vegetable product.

The methods comprise a process to enhance the solubility and dispersion characteristics of fruit and vegetable powders and water and juices and to avoid lumps and floating particles when the powder is mixed with the liquid. In order to enhance the solubility and dispersion characteristics, the fruits and vegetables are pureed 20 before drying 30 in order to release the easily dissolvable materials from the matrix of the fruits and vegetables which greatly facilitates dissolution when rehydrated. This has the effect of separating the problematic powder particles and allowing them to disperse in the liquid before they can interact with themselves. Many vegetable powders are heterogenous mixtures of plant parts, such as florets, leaves, and stems. When dispersed in water, some of these particles tend to float on the surface of the liquid, giving an unsightly appearance. If pureed before drying, the pieces may no longer be readily visible.

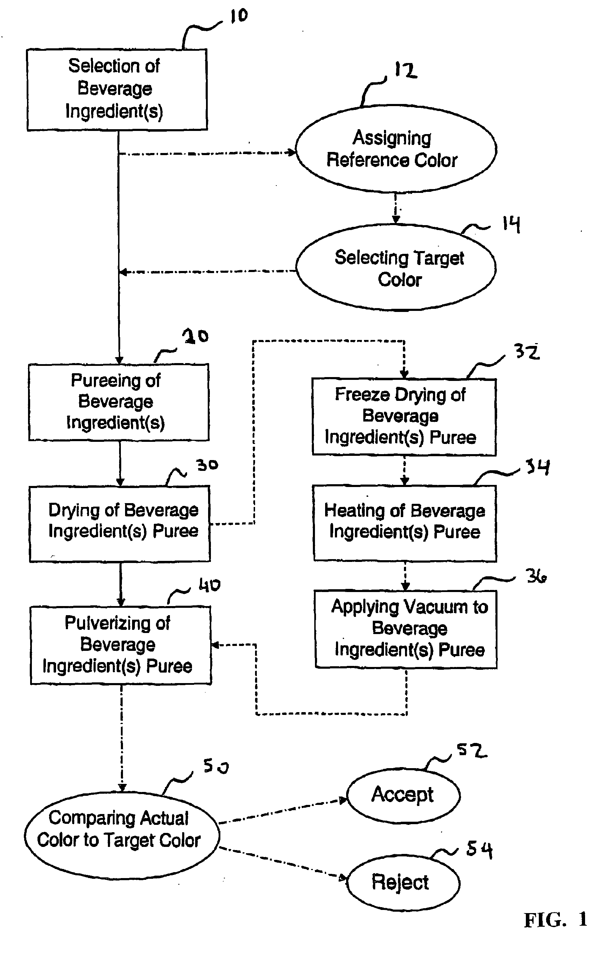

The methods generally comprise selecting beverage ingredients 10, followed by pureeing of the beverage ingredients 20 to form a beverage ingredient puree, drying of the beverage ingredient puree 30 to form a dried beverage ingredient puree, and then pulverizing the dried beverage ingredient puree 40 into a beverage powder, as illustrated in the diagram of FIGURE 1.

The step of selecting the beverage ingredients 10 involves choosing one or more fruits or vegetables. The fruits or vegetables are selected to provide nutritional benefits, such as vitamins and minerals. For example, bananas or avocados may be selected to provide potassium, while cantaloupe or carrots may be selected to provide vitamin A. The fruits or vegetables may be provided individually, or may be combined into groups, such as for flavoring or nutritional advantages.

The step of pureeing the selected beverage ingredients 20 into a beverage ingredient puree occurs prior to the step of drying the beverage ingredient puree 30. As an example, the beverage ingredients may be placed in a high speed knife blender or knife mill that has one or more blades disposed therein. Upon rotation of the blades, such as by a motor, the beverage ingredients are ground into a puree. For example, the blades are rotated at a speed of about 10, 000 revolutions per minute and for a duration of approximately two minutes in order to puree about two pounds of beverage ingredients. Water or other liquids may be placed within the blender or mill, preferably at a level covering the blades, to assist in the pureeing of the beverage ingredients.

Pureeing of the beverage ingredients preferably, but not necessarily, is to such a degree that the easily dissolvable materials, such as water-soluble sugars, polysaccharides, organic acids and pigments are released from the matrix of the beverage ingredients. The term matrix, as used herein, at least means cell walls, such as cell wall polysaccharides and lignin. Releasing the easily dissolvable materials from the matrix advantageously facilitates their dissolution when the beverage powder is rehydrated into a beverage, as discussed above, reducing clumping of the powder and floating particles in the resulting beverage.

After the step of pureeing the beverage ingredients 20, the resulting beverage ingredient puree is dried 30 to dehydrate the puree. Several methods can be used, either alone or in combination, to dehydrate the puree. In a preferred method, the beverage ingredient puree is freeze dried 32. By way of example only, the freeze drying may occur in a freeze drier or lyophilizer, where, for example, approximately 100 pounds of beverage ingredient puree may be subjected to temperatures of between about -20°C and -40°C for a duration of about 10 hours. During the freeze drying step 32, a vacuum step 34 may be applied to the freeze-dried beverage ingredient puree to further dehydrate the beverage ingredient puree. The vacuum may be applied in a chamber, such as a freeze drier or lyophilizer, where, for example, approximately 100 pounds of beverage ingredient puree may be held under a vacuum of between about 50 and 300 millitorr. To assist the vacuum step 34 with dehydrating the beverage ingredient puree, a gentle heating step 36 may be applied during the vacuum step 34. The heating step 36 may involve applying a heat of about 30°C and higher, such as for approximately 100 pounds of beverage ingredient purse.

Following the step of drying the beverage ingredient puree 30, the dried beverage ingredient puree is subjected to a pulverizing step 40 to produce a beverage ingredient powder. The pulverizing step 40 may be accomplished, for example, by a gentle milling process. The beverage ingredient powder preferably has average particle sizes of less than about 1000 micrometers.

The methods for forming beverage powders may also be used to produce beverage powders having desirable color characteristics, both in the powder form and when mixed with a beverage. After the step of selecting the beverage ingredients 10, a reference color is assigned 12 to the selected beverage ingredients. The reference color is associated with a natural or fresh color of the actual beverage ingredients. For example, a shade of red may be selected as a reference color for an apple having a matching or closely matching shade of red, such as in a fresh state as perceived by a consumer. A target color for the beverage powder may then be selected 14, such as to generally correspond to the reference color. Variations may exist between the reference color and the selected target color, such as to account for consumer preferences pertaining to color associations that are not exact matches with the reference color.

After the step of pulverizing the dried beverage ingredient puree, a comparison step 50 is performed to compare the actual color of the resulting beverage powder with the target color. If the actual color matches the target color for the beverage powder within acceptable limits, then the beverage powder, and the process parameters used to produce the beverage powder, can be accepted and repeated for future production of beverage powders. However, if the actual color does not match the target color for the beverage powder in the comparison step 50 to within acceptable limits, then the beverage powder can be rejected and variations made to the process parameters, such as those discussed herein, in order to achieve an acceptable match between the actual color of the beverage powder and the target color.

The beverage powder can be packaged in a variety of configurations, such as canisters or packets, for consumers to mix with liquid mediums to rehydrate the beverage ingredients to form a beverage. Suitable liquid mediums include water, orange juice, or other fruit or vegetable juices. The powders may be packaged in bulk, where a consumer can measure the desired portions of powder to make a desired quantity of beverage. The powders may also be packaged into single-serving sizes. The beverage powders for multiple different beverage ingredients may also be provided, thereby allowing a consumer to customize a beverage by mixing different powders together. For example, a consumer desiring a beverage having a high concentration of both potassium and vitamin A may mix together carrot and avocado beverage powders. Example recipes for combining different beverage powders may be provided to the consumer, such as on packaging for the powders. Additional ingredients may be added to the beverage powders, either in the powder state, when mixed with the liquid medium, or during the pureeing step 20. Additional ingredients may include, for example, sweeteners, flavorings, or nutritional supplements.

The powders may be formed into premeasured or easy to measure beverage products which deliver specific wellness chemistries and/or target specific wellness opportunities. Wellness chemistries and opportunities include fruits and/or vegetables associated with particular vitamins and minerals. The products may be sold in bottles, packets, or canisters, and are primarily designed to be mixed or blended with liquids. The liquids may include fortified orange juice, grape juice, or complete systems requiring only water. The products may be made with whole foods or minimally processed whole foods.

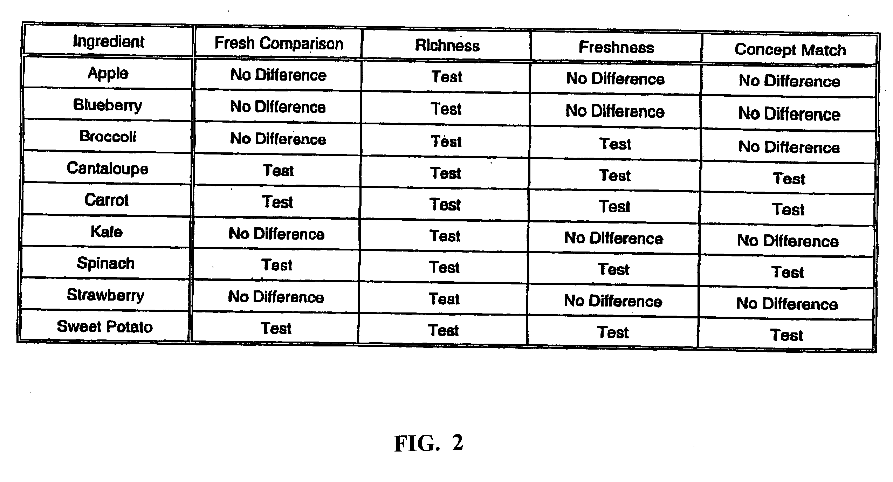

Sensory testing can be used to evaluate the visual perception of the color of the dried fruit or vegetable samples in order to determine how the methods described herein changes the color perception. A test was performed to evaluate different fruits and vegetable powders, comparing colors of both the prior art powdering methods and the powdering methods in accordance with the inventions. There were several different outcomes that were possible. The first was that the test sample has a richer color. The second is that a richer color gives the perception that the sample is fresher. Third, a sample that was perceived to be fresher in color would be closer in color to the perceived fresh form of the fruit or vegetable. Fourth, a richer color sample may better match the concept of a fruit or vegetable beverage. The results of the testing are set forth in FIGURE 2.

Evaluation was done using a sensory panel, where samples of powdered fruits and vegetables were visually evaluated based upon their color. The powder samples were presented in a clear packet attached to a white plastic plate to allow the color of the powder sample to be clearly visible. The samples were shown in a randomized order using blind codes. The panelist evaluated the samples in a controlled light setting configured to allow for the colors to be identified. Powders were made from fruits and vegetables including apple, blueberry, broccoli, cantaloupe, carrot, kale, spinach, strawberry, sweet potato, and a fruit and vegetable combination.

It was found that the cantaloupe, carrot, spinach, and sweet potato powders were significantly closer to the fresh color of the product as compared to the control. Richness of the colors was also measured. All of the different types of powders were chosen by the panel to be richer in color as compared to the control. The broccoli, cantaloupe, carrot, spinach, and sweet potato powders were chosen to be fresher in appearance than the control sample. As a result of the testing, it was determined that the test sample has a richer color, and that a richer color is associated with freshness.

Based on this evaluation, the methods described here were found to increase the richness of color for the fruit and vegetable varieties. For all varieties, the sample that was perceived to be fresher was also perceived to be a better color match for the beverage application.

In one example, blueberries were formed into a powder according to the methods described herein. This was accomplished by adding water to ensure blending of the product during puréing. The product and water were blended and pureed until smooth. The puree was then freeze dried and pulverized into a fine powder. Upon dispersion in water, virtually no clumps were visible as compared to a control prepared without the pureeing step. The powder was found to have a darker and richer appearance as an additional benefit.

In another example, strawberries were blended with water and pureed until smooth. The puree was freeze dried and pulverized into a fine powder. Upon dispersion in water, dissolution was improved. In addition, the product in powder form has a darker and richer color as opposed to a powder formed without the pureeing step.

In yet another example, broccoli was pureed until smooth. The puree was freeze dried and then pulverized into a fine powder. Upon dispersion in water, virtually no floating material was observed as compared to a control that was not formed using the pureeing step. In addition, the pureed powder had a richer green color, and the viscosity of the final solution was also increased.

In another example, spinach was pureed until smooth. The puree was freeze dried and then pulverized into a fine powder. Upon dispersion in water there were virtually no floating material observed as compared to a control, which was freeze dried and pulverized into a fine powder without having been pureed prior. In addition, the powder had a richer green color and an increased viscosity as compared to the control.

In another example, kale was pureed until smooth. The kale puree was then freeze dried and pulverized into a fine powder. A control sample of kale powder was also prepared, however, the puréing step was skipped and the kale was simply freeze dried and pulverized into a fine powder. Upon dispersion in water virtually no clumps were visible for the pureed sample as compared to the control sample prepared without the puréing step. The pureed powder also was found to have a richer green color. Moreover, the viscosity is significantly increased, giving the product a very full bodied texture as compared to the control sample when mixed with a liquid.

In another example, blueberries were pureed until smooth, freeze dried, and then pulverized into a fine powder. The powder was then mixed with orange juice instead of water. The resulting beverage had an essentially lump free dispersion of the powder.

In another example, blueberries and strawberries were pureed together, freeze dried, and then pulverized into a fine powder. When mixed with orange juice, instead of water, the dissolution was improved as compared to a control that was not pureed. In yet another example, blueberries were pureed, freeze dried, and then pulverized into a fine powder. When mixed with grape juice, there is a very easy and complete dispersion of the dry powder in the beverage.

Another example included pureeing blueberries, broccoli, spinach, and raspberries together, freeze drying the pureed mixture, and then pulverizing the freeze dried pureed mixture into a fine powder. The powder was then mixed with grape juice and resulted in a complete dispersion of the dried powder in the water.

As will be appreciated, methods for producing beverage powders having improved color and/or dispersion characteristics are provided by the inventions described herein. However, the inventions are not limited to the preferred embodiments described hereinabove or to any particular embodiments.

## Claims

1. A method of producing a beverage powder mixable with a liquid medium to form a beverage, the method comprising, in order:
providing at least one beverage ingredient, including at least one of a fruit and a vegetable;
pureeing the at least one beverage ingredient into an ingredient puree;
freeze drying the ingredient puree into a dried ingredient puree; and
pulverizing the dried ingredient puree to form a powder.

2. A method of producing a beverage powder in accordance with Claim 1, including the step of adding a liquid to the at least one beverage ingredient prior to the step of pureeing the at least one beverage ingredient into an ingredient puree.

3. A method of producing a beverage powder in accordance with Claim 1 or 2, wherein the step of pureeing the at least one beverage ingredient into an ingredient puree includes releasing easily dissolvable materials from a matrix for the at least one beverage ingredient.

4. A method of producing a beverage powder in accordance with Claim 3, wherein the step of releasing easily dissolvable materials from a matrix for the at least one beverage ingredient includes the step of separating problematic particles and allowing them to disperse before they interact among themselves.

5. A method of producing a beverage powder in accordance with any one of Claims 1 to 4, including the step of packaging the powder in one of a bottle, packet or canister.

6. A method of producing a beverage powder in accordance with any one of Claims 1 to 5, including the step of mixing the beverage powder with a liquid medium to form the beverage, wherein the liquid medium comprises a juice made, at least in part, from a fruit or vegetable.

7. A method of producing a beverage powder in accordance with any one of Claims 1 to 5, including the step of mixing the beverage powder with a liquid medium to form the beverage, wherein the liquid medium comprises water.

8. A method of producing a beverage powder in accordance with any one of Claims 1 to 7, wherein the step of freeze drying the ingredient puree into a dried ingredient puree includes the step of vacuum drying the dried ingredient puree.

9. A method of producing a beverage powder in accordance with Claim 8, wherein the step of vacuum drying the dried ingredient puree includes the step of heating the dried ingredient puree.

10. A method of producing a beverage powder in accordance with Claim 9, wherein at least a portion of the step of freeze drying the ingredient puree into a dried ingredient puree occurs at temperatures between -20°C and -40°C, at least a portion of the step of vacuum drying the dried ingredient puree occurs at a vacuum of between 50 and 300 millitorr, and at least a portion of the step of heating the dried ingredient puree occurs at a temperature above 30°C.

11. A method of making a beverage powder formable into a beverage having a target color, the method comprising, in sequence:
selecting one or more fruits or vegetables;
assigning a reference color to the one or more fruit or vegetables:
selecting a target color for the beverage powder, the target color for the beverage powder corresponding to the reference color assigned to the one or more fruit or vegetables;
pureeing the one or more fruits or vegetables into an ingredient puree;
dehydrating the ingredient puree into a dried ingredient puree;
grinding the dried ingredient puree to reduce the dried ingredient puree into a beverage powder, the beverage powder being formable into a beverage upon mixing with a liquid medium; and
comparing the actual color of the beverage powder to the target color and either discarding the beverage powder if the actual color and target color do not match or accepting the beverage powder if the actual color and target color match.

12. A method of making a beverage powder in accordance with Claim 11, wherein the step of dehydrating the ingredient puree into a dried ingredient puree includes the step of freeze drying the ingredient puree.

13. A method of making a beverage powder in accordance with Claim 12, wherein the step of dehydrating the ingredient puree into a dried ingredient puree also includes the step of drying the ingredient puree under a vacuum.

14. A method of making a beverage powder in accordance with Claim 13, wherein the step of drying the ingredient puree under a vacuum includes the step of applying heat to the ingredient puree.

15. A method of making a beverage powder in accordance with any one of Claims 11 to 14, wherein the step of assigning a reference color to the one or more fruit or vegetables includes the step of selecting the reference color to correspond to a fresh color associated with a fresh form of the one or more fruit or vegetables.

16. A method of making a beverage powder in accordance with any one of Claims 11 to 15, wherein the step of selecting a target color for the beverage powder includes the step of adjusting the reference color based upon a color of a liquid medium with which the beverage powder is to be mixed.

17. A method of making a beverage powder in accordance with Claim 16, including adjusting the reference color based upon the resulting color when the beverage powder is mixed with a liquid medium that includes a fruit or vegetable juice.

18. A method of making a beverage powder in accordance with any one of Claims 11 to 17, wherein the one or more fruit or vegetables includes one of broccoli, cantaloupe, carrot, spinach, sweet potato, apple, blueberry, kale, and strawberry.

19. A beverage powder made in accordance with any one of Claims 11 to 18.

20. An apparatus for producing a beverage powder mixable with a liquid medium to form a beverage, the apparatus comprising:
means for providing at least one beverage ingredient, including at least one of a fruit and a vegetable;
means for pureeing the at least one beverage ingredient into an ingredient puree;
means for freeze drying the ingredient puree into a dried ingredient puree; and
means for pulverizing the dried ingredient puree to form a powder.
